# EUROPEAN PATENT APPLICATION

(11) **EP 4 760 552 A1**
(43) Date of publication of application: **17.06.2026**
(21) Application number: 25219397.4
(22) Date of filing: 28.11.2025
(51) Int. Cl.: G06F 21/10, G06F 21/12, G06F 21/57, G06F 21/62

(54) **METHODS AND SYSTEMS FOR SECURE CONTROLLED UNLOCK OF DEVICE FUNCTIONALITY**

(30) Priority: 16.12.2024 US 202418982425
(71) Applicant: GE Vernova Technology GmbH, 5400 Baden (CH)
(72) Inventor: AHMED, Safayet Nizam Uddin, Niskayuna, 12309 (US); RIDENOUR, Harry P., Salem, 24153 (US); LAFFOON, Daniel R., Salem, 24153 (US); SCULTHORPE, Garrett William, Niskayuna, 12309 (US)
(74) Representative: Rüger Abel Patentanwälte PartGmbB

(57) **Abstract**

Methods and systems for controlling access to restricted functionality (125) of a computing device (100) are provided. The method (400) can include receiving a request for access to restricted functionality (125) of a computing device (100), the request for access identifying at least a portion of the restricted functionality (125) to be unlocked. The method (400) can include transmitting the request to a trusted license store (140) and receiving data indicative of a license, including an identifier of the portion of the restricted functionality (125) and a number of times the user may access the restricted functionality (125). The method (400) can include determining that the user has not accessed the restricted functionality (125) more than the number of times the user may access the restricted functionality (125). The method (400) can include, in response to determining that the user has not accessed the restricted functionality (125) more than the number of times, providing access to the restricted functionality (125).

## Description

### FIELD

The present disclosure relates generally to providing secure access to restricted device functionality. In particular, aspects of the present disclosure enable access to functionality on a locked computing device whose complete functionality is otherwise restricted.

### BACKGROUND

Many computing devices, such as controllers used in a variety of electronic appliances and other devices, run authorized binary files that are signed by a signing authority, ensuring that the computing devices are running only the binaries and configurations that are needed by the computing device to perform its function. However, there are specific cases, such as return merchandise authorization (the return of a controller to a factory for diagnostics or repair) or developing software for the computing device, that require restrictions on the functionality of the computing device to be relaxed, enabling functionality that are typically not needed and may not be desirable under normal secure operation.

Commonly, restricting access to this functionality requires an administrator of private key to restrict access to the signed images, or versions of software, that enable the security-sensitive functionality. However, if the signed images of the software need to be shared with third parties, it may be difficult to prevent leak of the signed images. Such leaks would make security-sensitive functionality more broadly available to third parties.

### SUMMARY

Aspects and advantages of systems and methods in accordance with the present disclosure will be set forth in part in the following description, or may be obvious from the description, or may be learned through practice of the technology.

In accordance with one embodiment, a method is provided. The method can include receiving, by one or more electronic processors, a request for access to restricted functionality of a computing device from a user, the request for access identifying at least a portion of the restricted functionality of the computing device to be unlocked for access by the user. The method can also include transmitting, by the one or more electronic processors, the request to a trusted license store and receiving, by the one or more electronic processors, data indicative of a license from the trusted license store, the data indicative of the license comprising an identifier of the portion of the restricted functionality to be unlocked for access and a number of times the user may access the restricted functionality. The method can further include determining, by the one or more electronic processors, that the user has not accessed the restricted functionality more than the number of times the user may access the restricted functionality. The method can also include, in response to determining that the user has not accessed the restricted functionality more than the number of times the user may access the restricted functionality, providing, by the one or more electronic processors, access to the restricted functionality to the user.

In accordance with another embodiment, a computing device is provided. The computing device can include one or more processors and a non-transitory, computer-readable medium comprising instructions that, when executed by the one or more processors, cause the one or more processors to execute operations. The operations can include receiving a request for access to restricted functionality of a computing device from a user, the request for access identifying at least a portion of the restricted functionality of the computing device to be unlocked for access by the user. The operations can also include transmitting the request to a trusted license store and receiving data indicative of a license from the trusted license store, the data indicative of the license comprising an identifier of the portion of the restricted functionality to be unlocked for access and a number of times the user may access the restricted functionality. The operations can further include determining that the user has not accessed the restricted functionality more than the number of times the user may access the restricted functionality. The operations can also include, in response to determining that the user has not accessed the restricted functionality more than the number of times the user may access the restricted functionality, providing access to the restricted functionality to the user.

In accordance with a further embodiment, a non-transitory, computer-readable medium is provided. The non-transitory, computer-readable medium can include instructions that, when executed by one or more processors, cause the one or more processors to execute operations. The operations can include receiving a request for access to restricted functionality of a computing device from a user, the request for access identifying at least a portion of the restricted functionality of the computing device to be unlocked for access by the user. The operations can also include transmitting the request to a trusted license store and receiving data indicative of a license from the trusted license store, the data indicative of the license comprising an identifier of the portion of the restricted functionality to be unlocked for access and a number of times the user may access the restricted functionality. The operations can further include determining that the user has not accessed the restricted functionality more than the number of times the user may access the restricted functionality. The operations can also include, in response to determining that the user has not accessed the restricted functionality more than the number of times the user may access the restricted functionality, providing access to the restricted functionality to the user.

These and other features, aspects and advantages of the present methods and systems will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present systems and methods including the best mode of making and using the present systems and methods, directed to one of ordinary skill in the art, is set forth in the specification, which makes reference to the appended figures, in which:
FIG. 1 is a block diagram illustrating a computing device in accordance with embodiments of the present disclosure.
FIG. 2 illustrates an example mutually-authenticated network connection in accordance with embodiments of the present disclosure;
FIG. 3 illustrates two-factor authentication in accordance with embodiments of the present disclosure;
FIG. 4A illustrates a computing device that will undergo a one-way unlocking operation in accordance with embodiments of the present disclosure.
FIG. 4B illustrates secure boot functionality in accordance with embodiments of the present disclosure.
FIG. 4C illustrates secure boot functionality in accordance with embodiments of the present disclosure.
FIG. 5 is a flow chart illustrating a method for controlling access to restricted functionality of a computing device in accordance with embodiments of the present disclosure.

### DETAILED DESCRIPTION

Reference now will be made in detail to embodiments of the present methods and systems, one or more examples of which are illustrated in the drawings. Each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents.

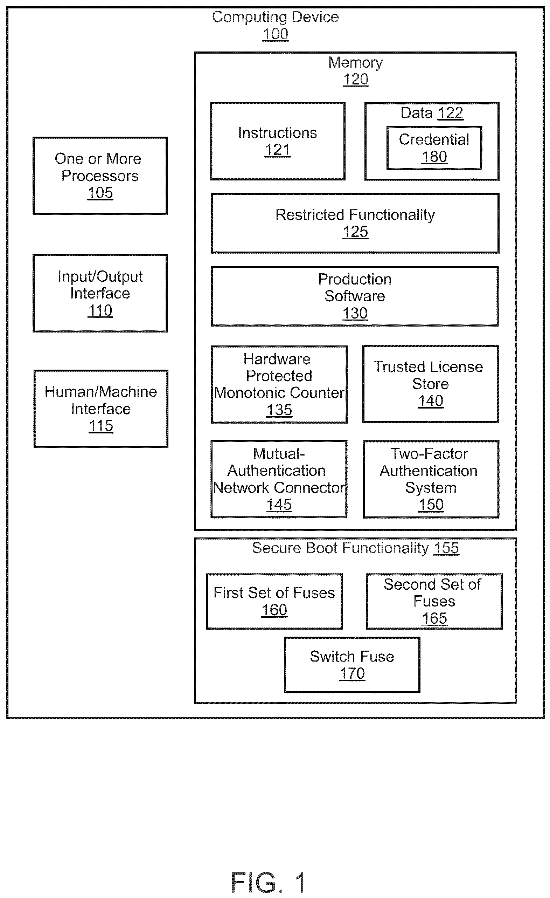

FIG. 1 is a block diagram illustrating a computing device 100 in accordance with embodiments of the present disclosure. In some embodiments, the computing device 100 can be an electronic controller that is used to control one or more electronic devices, such as electrical appliances, industrial machines, and the like. In other embodiments, the computing device 100 can be a personal computing device, such as a laptop, smartphone, tablet, smart wearable, or the like. In further embodiments, the computing device 100 can be a server or other computing system.

The computing device 100 can comprise one or more processors 105, an input-output interface 110, a human-machine interface 115, and a memory 120.

The one or more processors 105 can be one or more electronic processors, such as microprocessors, programmable logic controllers ("PLCs"), field programmable gate arrays ("FPGAs"). The one or more processors 105 can be configured to, among other things, read and execution instructions to perform one or more methods as described herein.

The input-output interface 110 can enable the computing device 100 to communicate with other computing devices, peripheral devices, computing networks, and the like. For example, the input-output interface 110 can include one or more interfaces for performing wired or wireless communications with another computing device over one or more computing networks.

The human-machine interface 115 can enable a user to interact with the computing device 100. In some embodiments, the human-machine interface 115 can include one or more interfaces that display information to a user, such as a display screen, and can also include one or more interfaces that allow a user to interact with information displayed on the screen, such as including a touch-screen component, a mouse component, a keyboard component, a stylus component, and the like.

The memory 120 can include one or more non-transitory, computer-readable memories, such as random access memory ("RAM"), a hard drive, a solid-state drive, and other forms of computer memory. The memory 120 can store instructions 121 that, when executed by the one or more processors 105, cause the one or more processors 105 to perform operations, including operations related to methods described herein. The memory 120 can also store data 122 related to the operation of the computing device 100.

The memory 120 can also store restricted functionality 125. In other words, certain functionality available to the computing device 100 can be restricted from access, or "locked," from being available for use during normal operation of the computing device 100, such as when the computing device 100 is operating a software image 130, or a particular version of software available for use. The restricted functionality 125 can include, for example, access to development or administrative commands for the computing device 100, access to root functionality of the computing device 100, access to restricted and/or private data of the computing device 100, enabling the execution of one or more binary files outside the scope of the software image 130, changing one or more configuration files of the computing device 100, and the like. The restricted functionality 125 can therefore be locked from access for users using the computing device 100 in a production environment where the software image 130 being executed is production software, such as on a controller in an industrial machine or electronic appliance performing its intended functionality.

However, there are certain times where access to the restricted functionality 125 of the computing device 100 is necessary, such as when performing diagnostics on the computing device 100, testing a new version of software image 130 before shipping out the new version of the software image 130, and the like. To allow access to the restricted functionality 125 to only authorized individuals and to deny access to unauthorized individuals without compromising operational security of the computing device 100, a signed software license file can be generated. A software license file is a file generated to provide to a user a set of rights with regard to software, such as allowing access to restricted functionality 125. The software license can include public information, such as accesscontrol information indicative of the type, version, image, or build of software that the person possessing the license has permission to access, that is checked when a user attempted to access the restricted functionality 125 to verify that the user can access the restricted functionality 125.

The software license can include a binary file for execution on the computing device 100, an identity of a binary file for execution (such as a cryptographic hash), an identifier of the portion of the restricted functionality 125 to be unlocked for access, an identity of the user(s) who are allowed accessed to the restricted functionality 125, and a number of times the user may access the restricted functionality 125. The binary file for execution can be, for example, a software image 130 to be used for testing on the computing device 100, a diagnostic application to run on the computing device 100, or another software application to run on the computing device 100 to perform other restricted functionality on the computing device 100. In some embodiments, execution of the binary file limits functionality of the computing device 100 to operating a single computing application that gives the user access only to the portion of the restricted functionality 125. In another embodiment, execution of the binary file includes giving the user access to a shell, or command line interpreter, program that allows the user to access a limited set of tools and actions limited through one or more access controls. The set of tools and actions allow the user to interact with the portion of the restricted functionality 125 without allowing unfettered access to the entirety of the restricted functionality 125.

The identity of the user can be obtained based on a logged-in user on the computing device 100, a submission by the user self-identifying themselves, for example by receiving a public key associated with a particular user through user input, the swipe of a smart card associated with a user, and the like. Verifying the identity of the user allows access to the portion of the restricted functionality 125 only to the identified user to ensure the security of the computing device 100.

The number of times the user is allowed to access the restricted functionality 125 is set to prevent malicious actors from accessing non-production versions of software and/or restricted functionality 125. This helps to prevent third parties who are given access to computing devices, such as the computing device 100, from exceeding the limits of permitted access to the computing device 100. In some embodiments, when the user accesses the restricted functionality 125 using the signed software license, the computing device 100 can determine that the user has not yet accessed the restricted functionality 125 more than the number of times defined in the signed software license. In some embodiments, the computing device 100 can perform this determination by comparing a value stored in a monotonic counter 135 of the computing device 100 to the number of times the user may access the restricted functionality 125. A monotonic counter is a hardware-implemented counter that can store a value equivalent to the number of times the user has accessed the restricted functionality 125. When the user accesses the restricted functionality, the monotonic counter 135 can be incremented. If the stored value of the monotonic counter 135 is greater than the number of times the user may access the restricted functionality 125, the user can be locked out of accessing the restricted functionality 125, thus preventing the user from exceeding the limits of the signed software license.

In some embodiments, the signed software license can also include a unique identifier of the computing device 100. The unique identifier of the computing device 100 can include at least one of a unique serial number of the computing device 100 and a unique public key associated with the computing device 100. The inclusion of the unique identifier of the computing device 100 in the signed software license can be advantageous so that the signed software license cannot be applied to any other computing device but the specific computing device 100, thus ensuring higher security for accessing restricted functionality of other computing devices.

In some embodiments, the signed software license can further include a unique identifier of the computing device 100, where the unique identifier of the computing device 100 includes at least one of a unique serial number of a component of the computing device 100 and a unique public key associated with the component of the computing device 100. In these embodiments, the signed software license uses the unique identifier of the component to identify the entire computing device 100 (TPM - trusted platform module as the component to be identified)

The signed software license can be obtained from a licensing authority computing system. In some embodiments, the memory 120 can store a trust store 140. The trust store 140 stores trusted certificates used to authenticate licenses that are allowed to access the computing device 100. In some embodiments, the trust store 140 can be software application and/or data repository stored on the computing device 100 that contains public keys that can be used to authenticate license files provided to the computing device 100 by a user, where the license files have been signed with a private key that is associated with one or more of the public keys stored in the trust store 140.

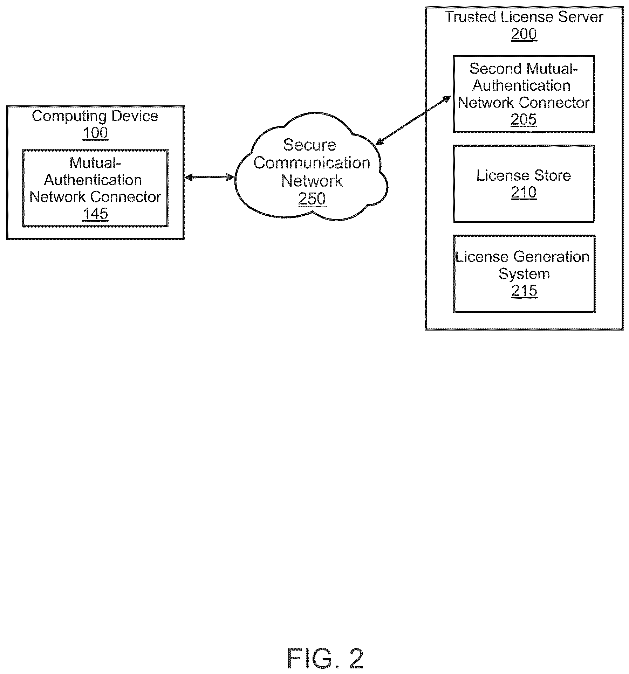

In another embodiment, the software license can be obtained from a remote computing system, such as a trusted license server, through a secure and mutually-authenticated network connection via a mutual-authentication network connector 145. An example of this network connection is illustrated in FIG. 2A.

The mutual-authentication network connector 145 of the computing device 100 can transmit a request to a trusted license server 200 to obtain a license. In some embodiments, the request can include an identity of the user sending the request, an identity of the license being provided, an identity of the portion of the restricted functionality 125 accessed is being requested to, an identity of the computing device 100, and the like. The request can also include key exchange information for mutual authentication.

The trusted license server 200 can receive the request at a second mutual-authentication network connector 205. The second mutual-authentication network connector 205 verifies the identity of the computing device 100 and/or the user of the computing device 100 while simultaneously the mutual-authentication network connector 145 authenticates the identity of the trusted license server 200. In some embodiments, the key exchange information can be used to allow both the trusted license server 200 and the computing device 100 to establish a shared key that is used to secure subsequent communications. Once the identities are mutually confirmed, a secure connection is established between the computing device 100 and the trusted license server 200 via a secured communication network 250.

The trusted license server 200 can also include a license store 210, which can store license information. In response to receiving the request from the mutual-authentication network connector 145, the trusted license server 200 can access the license store 210 to retrieve the proper license information based on the details transmitted in the request. The trusted license server 200 can then transmit the retrieved license information to the computing device 100 over the secure communication network 250.

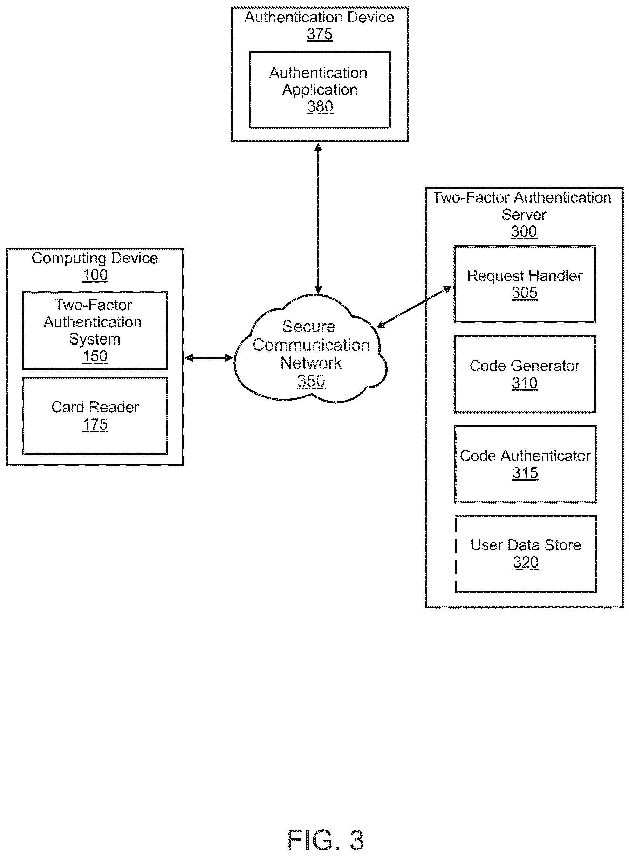

Returning now to FIG. 1, the computing device can also include a two-factor authentication system 150. In addition to needing a proper license to access the restricted functionality 125, a user may also be required to complete two-factor authentication through the two-factor authentication system 150 before full access to the portion of the restricted functionality 125. An example of two-factor authentication is shown in FIG. 3.

The computing device 100 can generate a request for two-factor authentication using the two-factor authentication system 150. The request can include an identifier of the user submitting the request, an identifier of the computing device 100, an identifier of the restricted functionality 125, and the like.

In some embodiments, the computing device 100 can include a smart card reader 175. The smart card reader 175 can read data from a smart card, such as a hardware authentication device that stores a private key, which can be used to authenticate the user in a similar manner to a mutual-authentication to the trusted license store 140. For example, a smart card can be inserted into the computing device 100 using the smart card reader 175 (e.g., inserting the smart card into a Universal Serial Bus port or similar) and read by the smart card reader 175 to identify a private key stored on the smart card. The smart card reader 175 can obtain a public key from the memory 120 that can be used in a challenge response protocol with the private key stored on the smart card to authenticate the user.

The request can be sent by the two-factor authentication system 150 over a secure communication network 350 to a request handler 305 of a remote computing system, such as two-factor authentication server 300. The request handler 305 receives the generated request. In some embodiments, the request handler 305 can access a user data store 320 to determine if the user who sent the request is a registered user for two-factor authentication and, in some embodiments, to obtain a means for sending an authentication message to the user, such as an email address or a phone number associated with the user.

After means for sending an authentication message to the user are obtained from the user data store 320, the two-factor authentication server 300 can use a code generator 310 to generate an authentication code. The authentication code can then be sent by the two-factor authentication server to the user via the means for communicating with the user, such as via email or text message, over the secure communication network 350 to authenticating device 375.

The user can receive the code at the authenticating device 375 and, in some embodiments, inputs the code into an authentication application 380. The authentication application 380 transmits the code back to the two-factor authentication server 300 over the secure communication network 350.

The two-factor authentication server 300 can receive the code from the authenticating device 375 and can verify that the code is the same code transmitted to the authenticating device 375 using a code authenticator 315. If the two codes do not match, the user is not authorized and therefore denied access to the restricted functionality 125 of the computing device 100. If the codes match, the two-factor authentication server 300 generates an authentication confirmation and sends the authentication confirmation to the two-factor authentication system 150. In response to receiving the authentication confirmation, the two-factor authentication system 150 can allow access to the restricted functionality 125 of the computing device, such as allowing execution of a binary file associated with the restricted functionality 125.

In another embodiment, instead of sending the request over a secure communication network, the computing device 100 can be electronically coupled with a two-factor authentication device (e.g., using a physical cord or the like) to ensure security of two-factor authentication. In this embodiment, the authentication device can be a hardware authentication device that can support, for example, one time passwords, public keys, and the like to authenticate that the user of the hardware authentication device is allowed access to the computing device 100.

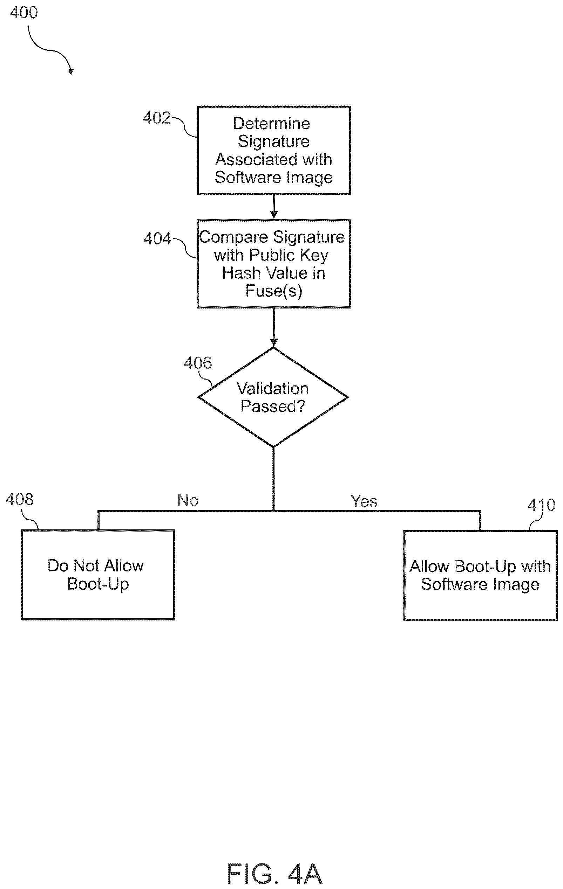

The memory 120 can also include secured boot functionality 155. The secured boot functionality 155 can include data values that control desired behavior of the computing device 100 during startup, or "boot," of the computing device 100. When the computing device 100 is turned on, the secure boot functionality 155 can execute as part of the startup process. The secure boot functionality 155 can be used to securely load a software image, such as software image 130, and verify that the software image 130 can be allowed to be booted and operate on the computing device 100. An example of the secure boot functionality 155 is shown by process 400 of Fig. 4A.

At block 402, the process 400 can include determining a signature associated with the software image 130 based on a private key associated with the software image 130. For example, when a version of the software image 130 is created, the private key can be used to sign the version of the software image 130, which provides an indication that the version of the software image 130 comes from a trusted source that has access to the private key. The version of the software image 130 can then be deployed to computing devices, such as computing device 100.

During boot-up of the computing device 100, the signature associated with the software image 130 can be accessed by the computing device 100. This signature can include data indicative of the private key, such as data encrypted by the private key.

To create a signature, a hash value associated with the software image 130 can be calculated and the resulting hash value can be encrypted with the private key, with the final result being a created digital signature. This signature can be encrypted using one or more encryption algorithms, such as the Rivest Shamir Adleman ("RSA") encryption algorithm, the Elliptic Curve Digital Signature Algorithm ("ECDSA") encryption algorithm, or another suitable encryption algorithm. The created digital signature can then be attached to or embedded in the software image 130, along with a public key for use in later signature verification on the computing device 100.

When the computing device 100 boots up, the public key is acquired from the software image 130 and then hashed to obtain a public key hash value.

At block 404, the process 400 can include comparing the public key hash value to a programmed hash value stored in a first set of fuses 160.

When the computing device 100 is provisioned, a public key hash value can be programmed into the first set of fuses 160. To program the public key hash value, the computing device 100 can receive the public key associated with the private key that will be used to sign software image 130 can be received by the computing device 100. A public key hash value can be generated based on the public key. This public key hash value can then be programmed into the first set of fuses 160 by, for example, generating a combination of values to be set as voltage values in the first set of fuses 160.

In some embodiments, the first set of fuses 160 can store a security version number ("SVN"). The SVN can be a value that is determined using values other than a public key-private key pair used to sign the software image 130. For example, the manufacturer of the software image 130 can create different versions of the software image 130 for distribution while maintaining the same SVN for each version of the software image 130. This SVN value can be stored as the programmed value stored in the first set of fuses 160. In these embodiments, instead of comparing a signature made using a private key associated with the software image 130, the computing device 100 can compare a SVN of the software image 130 to the SVN value stored in the first set of fuses 160 for purposes of determining whether the software image 130 is valid. In some embodiments, the first set of fuses 160 can store the public key hash for use during operation of secure boot functionality 155, and a different set of fuses can store the SVN. During operation of secure boot functionality 155, the public key hash value can always be required, and the SVN may be used in addition to comparing the public key hash to the signature.

In some embodiments, use of the public key for validation is always required for secure boot functionality 155 because a signature check is required. In these embodiments, the SVN may be used in addition to the public key for purposes of rollback attack protection, and therefore would be stored in a set of fuses that are not associated with the stored public key value. Furthermore, instead of storing a hash value of the SVN, these separate fuses store the SVN value itself.

At block 406, the process 400 can include determining, using an output of the validation algorithm, whether the software image 130 passes validation or does not pass validation. For example, if the public key hash value associated with the software image 130 matches the public key hash value programmed into the first set of fuses 160, the public key is determined to be a trusted public key. The public key can then be used to verify the signature of the software image 130 by, for example, creating a new hash of the software image 130 and comparing the new hash to the decrypted signature. If the new hash and the decrypted signature match, the software image 130 can be determined to be a valid software image.

At block 408, if the software image 130 does not pass validation, the computing device 100 does not allow boot-up with the software image 130. In some embodiments, the computing device 100 can be immediately rebooted in response to the software image 130 being invalid, which can cause the computing device 100 to enter a "reboot loop" if a valid software image 130 is not provided to the computing device 100. In another embodiment, if the software image 130 is invalid, the computing device 100 can be prevented from booting entirely, by either turning off the computing device 100 or disabling access to any functionality of the computing device 100 except for the ability to provide a new software image 130 to the computing device 100 for re-validation.

At block 410, if the software image 130 passes validation, the computing device 100 can continue boot-up using the software image 130, which can involve installing the software image 130 on the computing device 100 to allow interaction with the functionality of the software image 130 by the computing device 100.

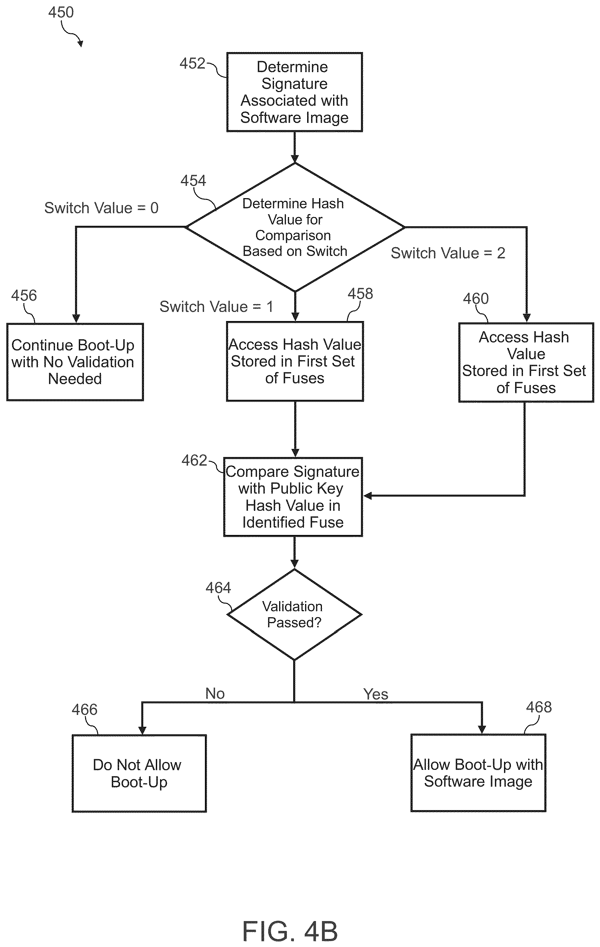

In another embodiment, the secure boot functionality 155 can include a validation process that compares values to different hash values stored in different sets of fuses, such as the first set of fuses 160 or a second set of fuses 165, such as process 450 illustrated in Fig. 4B.

At block 452, the process 450 can include identifying a signature associated with the software image 130. When a version of the software image 130 is created, a private key can be used to sign the version of the software image 130, which provides an indication that the version of the software image 130 comes from a trusted source that has access to the private key. To sign the software image 130, the signer of the software image 130 can hash the software image 130 and encrypt the hashed software image 130 using the private key. The encrypted result of this process can be the signature of the software image 130. The encrypted result of the hashing of the software image 130 can then be deployed to computing devices, such as computing device 100.

To identify the signature, the computing device 100 can access the software image 130 to identify a public key stored with the software image 130 and a signature stored with the software image 130.

At block 454, the process 450 can include determining a programmed hash value to compare the hashed public key value obtained from the software image 130 with based on a value of switch fuse 170.

To determine the programmed hash value, the identified public key in the signature of the software image 130 can be hashed using a hashing algorithm.

In some embodiments, the switch fuse 170 can be set to a value to indicate how validation should occur and what values should be used to perform validation. In one example, the switch fuse 170 can be set to one of three possible values: 0, 1, or 2. Each value can indicate a different process and/or different values to be used for validation of the software image 130. For example, at block 456, if the switch fuse 170 has a value of 0, there can be no further validation steps required, and the computing device 100 can proceed with boot-up using the software image 130 as-is with no additional controls on the software image 130.

In some embodiments, the switch fuse 170 can be set to a value of 1. At block 458, if the switch fuse 170 is set to a value of 1, the process 450 can access a public key hash value programmed as the programmed hash value in the first set of fuses 160. In some embodiments, the first set of fuses 160 can be considered "primary" fuses, which can indicate that the programmed hash value of the first set of fuses 160 can be a public key hash value associated with software images that are production software images or other, less permissive software images. Production software images can have less access to restricted functionality of the computing devices, such as not being given access to restricted functionality 125, because the production software images can be designed for operation in a real-world scenario, such as on a controller in a factory or a controller in an electrical appliance. Production software images should not need access to more restricted functionality of the computing device 100 while operating in a real-world scenario.

In some embodiments, the switch fuse 170 can be set to a value of 2. At block 460, if the switch fuse 170 is set to a value 2, the process 450 can access a public key hash value programmed as the programmed hash value in the second set of fuses 165. In some embodiments, the second set of fuses 165 can be considered "backup" fuses, which can indicate that the programmed hash value of the second set of fuses can be a public key hash value associated with test software images or other, more permissive software images. These more permissive software images can allow users to access more functionality of the computing device 100 and/or the software image 130 for testing or troubleshooting purposes.

Whether the programmed hash value is selected from the first set of fuses 160 or the second set of fuses 165, at block 462, the selected programmed hash value is compared to the public key hash value determined based on the public key of the software image 130.

At block 464, the process 450 can include determining, using an output of a validation algorithm, whether the software image 130 passes validation or does not pass validation.

At block 466, if the software image 130 does not pass validation, the computing device 100 does not allow boot-up with the software image 130. In some embodiments, the computing device 100 can be immediately rebooted in response to the software image 130 being invalid, which can cause the computing device 100 to enter a "reboot loop" if a valid software image 130 is not provided to the computing device 100. In another embodiment, if the software image 130 is invalid, the computing device 100 can be prevented from booting entirely, by either turning off the computing device 100 or disabling access to any functionality of the computing device 100 except for the ability to provide a new software image 130 to the computing device 100 for re-validation.

At block 468, if the software image 130 passes validation, the computing device 100 can continue boot-up using the software image 130, which can involve loading or installing the software image 130 on the computing device 100 to allow interaction with the functionality of the software image 130 by the computing device 100.

In some embodiments, the programmed hash value associated with the SVN can be stored in one or more separate banks of fuses other than the first set of fuses 160 or the second set of fuses 165. The SVN can be a value that is determined using values other than a public key-private key pair used to sign the software image 130. For example, the manufacturer of the software image 130 can create different versions of the software image 130 for distribution while maintaining the same SVN for each version of the software image 130. This SVN value can be stored as the programmed value for one or more separate sets of fuses. In these embodiments, instead of comparing a signature made using a private key associated with the software image 130, the computing device 100 can compare a value associated with an SVN of the software image 130 to the SVN value stored in the separate sets of fuses for purposes of determining whether the software image 130 is valid.

It can be contemplated that the switch fuse 170 can have more or less values associated with controlling which validation steps to take and which validation values are to be used. Additionally, it can be contemplated that the values that can be stored within the switch fuse 170 can be values other than 0, 1, or 2, but rather any suitable values that can be used to direct process 450 along the correct validation path.

In some embodiments, the secure boot functionality 155 can track a number of times a user accesses the restricted functionality 125. For example, when the computing device 100 validates the software image 130, a monotonic counter, such as monotonic counter 135, can be incremented to indicate that the software image 130 has been validated. The value of the monotonic counter 135 can then be compared to a number of times the restricted functionality 125 is allowed to be accessed as indicated by the signature of the software image 130. If the value of monotonic counter 135 exceeds the number of times, the computing device 100 can refuse access to the restricted functionality by the software image 130, even if the software image 130 is otherwise validated.

In some embodiments, the switch fuse 170 can be used to protect against rollback attacks. A rollback attack involves purposefully using a prior version of software, such as the software image 130, to attempt to access the restricted functionality 125 of the computing device 100. This type of attack attempts to exploit security weaknesses that may be present in prior software images and/or exploit private keys that have been leaked to the public.

By utilizing the switch fuse 170, different public key hash values can be stored on the computing device 100, which allows manufacturers to have a secondary option (e.g., the "backup" second set of fuses 165) for securely validating and booting software images on the computing device 100, even if a private key for a software image has been leaked or a software image has otherwise been comprised. The manufacturer of the computing device 100 can "burn," or otherwise irrevocably change, the value stored in the switch fuse 170 to prevent the leaked information (private key or software image) from being able to be validated on the computing device 100.

"Burning" the value stored in the switch fuse 170, as mentioned, implies irrevocably changing the value stored in the switch fuse 170. For example, in one embodiment, a voltage can be driven to the switch fuse 170 to change the stored value in the switch fuse 170, which can result in physical alteration of the switch fuse 170 such that the switch fuse 170 can never be set back to the previously-stored value. In another embodiment, a special software can be used to access and change a digital value stored in the switch fuse 170 and then applying a "lock" on reverting to a previous value, such as incrementing a monotonic counter associated with the switch fuse 170. This effects a "one-way" unlocking of the computing device 100, because the computing device 100 can then never access the value of the set of fuses that are indicated by the switch fuse 170 before the change in the value of the switch fuse 170.

In some embodiments, the switch fuse 170 can be set to a value that requires no further validation when the computing device 100 is undergoing development, undergoing testing, or being used only in a testing, development, or diagnostic environment, where the computing device 100 is under sole control of the manufacturer of the computing device 100 and/or the manufacturer of the software image 130. These environments can be considered more secure, because the computing device 100 is in physical control of the manufacturer(s) and are therefore at much lower risk of attack. Because of this inherent safety, the switch fuse 170 can be set to a value of 0 or other suitable value to allow boot-up with the software image 130 without any extra validation required. This enables developers or testers of the computing device 100 and/or the software image 130 to implement quickly-changing versions of the software image 130 for development and testing without needing to validate the software image 130.

After development and/or testing use of the computing device 100 is complete, and the computing device 100 is ready for production use, the switch fuse 170 can be "burned" to eliminate the value that requires no validation. The value of the switch fuse 170 can be set to a value that instead requires validation for production use, such as the "1" value described above. When a user attempts to boot up the computing device 100 while the switch fuse 170 is set to this value, the software image 130 is accessed to identify a public key hash value or a public key which is then hashed to produce a hash value, which in turn is then compared to the programmed hash value of a set of fuses of the computing device 100 (e.g., the first set of fuses 160) as described above.

In some embodiments, "burning" the switch fuse 170 can also set the programmed hash value in the first set of fuses 160 to an initial SVN value. This SVN value can be set by the user who is "burning" the switch fuse 170 to match or be less than current SVN values associated with allowable software images, which can ensure that allow software images will pass validation, while older software images with lower SVN values will fail validation, preventing against rollback attacks. As SVN values increase with new versions of versions of the software image 130, the value in this fuse can be incremented to reflect new valid software images and not validate older software images with lower SVN values.

If the computing device 100 or private key values become compromised or suffers malfunction, the switch fuse 170 can again be "burned" by irrevocably changing the value from the current value to a new value, such as changing the value from "1" to "2." This new value can point to a different public key hash value stored in a different set of fuses, such as the second set of fuses 165. In some embodiments, the second set of fuses 165 can store an SVN that has a lower SVN value than the first set of fuses 160, allowing older software images with lower SVN values to be booted on the computing device 100 for testing or diagnostic purposes.

The computing device 100 can also store a credential 180 in the data 122. The identifying credential 180 can uniquely identify the computing device 100 for purposes of obtaining licenses for different versions of the software image 130. In some embodiments, the identifying credential 180 can be a private key associated with a trusted license.

In some embodiments, if the computing device 100 becomes compromised, the credential 180 can be deleted or otherwise destroyed by the computing device 100, rendering the computing device 100 unable to access licenses for valid software images. In another embodiment, a certificate authority that controls the license(s) associated with the credential 180 can revoke the license, preventing the credential 180 from being used to access any valid software images. In some embodiments, if the credential 180 is deleted, destroyed, or revoked the computing device 100 may no longer be able to boot any software images, or may be configured to fail any and all validations of any software images.

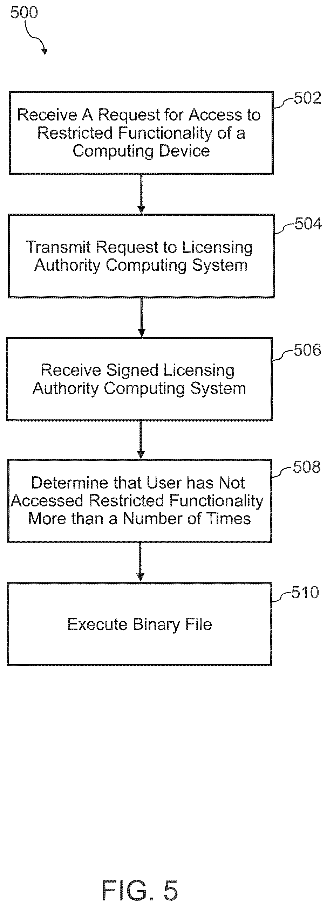

FIG. 5 is a flow chart illustrating a method 500 for controlling access to restricted functionality of a computing device in accordance with embodiments of the present disclosure.

At block 502, the method 500 can include receiving, by one or more electronic processors, a request for access to restricted functionality of a computing device from a user, the request for access identifying at least a portion of the restricted functionality of the computing device to be unlocked for access by the user.

At block 504, the method 500 can include transmitting, by the one or more electronic processors, the request to a trusted license store.

In some embodiments, the method 500 can further include transmitting the request to the trusted license store by establishing a secure, mutually-authenticated network connection to the trusted license server.

In some embodiments, transmitting the request to the licensing authority computing system can include providing the request to the digital signing authority.

At block 506, the method 500 can include receiving, by the one or more electronic processors, a signed license from the licensing authority computing system, the signed license comprising a binary file for execution on the computing device, an identifier of the portion of the restricted functionality to be unlocked for access, an identity of the user, and a number of times the user may access the restricted functionality.

In some embodiments, the method 500 can further include receiving the signed license over the mutually-authenticated network connection from the trusted license server.

In some embodiments, receiving the signed license can include the digital signing authority furnishing the signed license.

**In** some embodiments, the signed license can also include a unique identifier of the computing device. The unique identifier of the computing device can include at least one of a unique serial number of the computing device and a unique public key associated with the computing device.

**In** some embodiments, the signed license can include a unique identifier of the computing device. The unique identifier of the computing device can include at least one of a unique serial number of a component of the computing device, and a unique public key associated with the component of the computing device.

**In** some embodiments, the signed license permits access only to the component identified by the unique serial number or the unique public key.

At block 508, the method 500 can include determining, by the one or more electronic processors, that the user has not accessed the restricted functionality more than the number of times the user may access the restricted functionality.

**In** some embodiments, in response to determining that the user has not accessed the restricted functionality more than the number of times the user may access the restricted functionality, the method 500 can further include transmitting, by the one or more electronic processors, a two-factor authentication message to a remote computing device. The method 500 can also include receiving, by the one or more electronic processors, a two-factor authentication confirmation from a two-factor authentication computing system.

**In** some embodiments, in response to receiving the two-factor authentication confirmation, the method 500 can include allowing, by the one or more electronic processors, execution of the binary file.

**In** some embodiments, transmitting the two-factor authentication message to the remote computing device can be initiated in response to the user presenting a smart card identifying the user at the computing device.

**In** some embodiments, determining that the user has not accessed the restricted functionality more than the number of times the user may access the restricted functionality can include comparing, by the one or more electronic processors, the number of times the user may access the restricted functionality to a counter of the computing device and determining, by the one or more electronic processors, that the counter has a value less than or equal to the number of times the user may access the restricted functionality.

At block 510, the method 500 can include, in response to determining that the user has not accessed the restricted functionality more than the number of times the user may access the restricted functionality, executing, by the one or more electronic processors, the binary file on the computing device, wherein executing the binary file can include enabling access to the portion of the restricted functionality of the computing device identified in the signed license.

In some embodiments, the method 500 can further include, in response to executing the binary file, incrementing the counter of the computing device.

In some embodiments, the counter can be a hardware-protected monotonic counter.

In some embodiments, the method 500 can further include verifying the signed license, wherein verifying the signed license can include determining, by the one or more electronic processors, that the license is present, authentic, and intact by verifying a signature or a source of the signed license.

In some embodiments, executing the binary file on the computing device to enable access to the portion of the restricted functionality can include allowing execution, by the one or more electronic processors, of a single software application permitting a limited set of operations for the computing device.

In some embodiments, executing the binary file on the computing device to enable access to the portion of the restricted functionality can include enabling, by the one or more electronic processors, access to a shell with a limited set of tools and actions, wherein access to the shell is limited by one or more access controls.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components.

Terms of approximation, such as "about," "approximately," "generally," and "substantially," are not to be limited to the precise value specified. In at least some instances, the approximating language may correspond to the precision of an instrument for measuring the value, or the precision of the methods or machines for constructing or manufacturing the components and/or systems. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values.

As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Further aspects of the invention are provided by the subject matter of the following clauses: a method for controlling access to restricted functionality of a computing device, the method comprising receiving, by one or more electronic processors, a request for access to restricted functionality of a computing device from a user, the request for access identifying at least a portion of the restricted functionality of the computing device to be unlocked for access by the user; transmitting, by the one or more electronic processors, the request to a trusted license store; receiving, by the one or more electronic processors, data indicative of a license from the trusted license store, the data indicative of the license comprising an identifier of the portion of the restricted functionality to be unlocked for access and a number of times the user may access the restricted functionality; determining, by the one or more electronic processors, that the user has not accessed the restricted functionality more than the number of times the user may access the restricted functionality; and in response to determining that the user has not accessed the restricted functionality more than the number of times the user may access the restricted functionality: providing, by the one or more electronic processors, access to the restricted functionality to the user.

The method of one or more of these clauses, further comprising transmitting the request to the trusted license store comprises establishing a secure, mutually-authenticated network connection to the trusted license store; and receiving the data indicative of the license comprises receiving the data indicative of the license over the mutually-authenticated network connection from the trusted license store.

The method of one or more of these clauses, wherein the request includes a credential associated with the user.

The method of one or more of these clauses, wherein the data indicative of the license further comprises an identity of a binary file for execution, and wherein providing access to the restricted functionality comprises allowing execution of the binary file on the computing device.

The method of one or more of these clauses, the method further comprising executing, by the one or more electronic processors, the binary file, wherein the binary file executes a software image version on the computing device.

The method of one or more of these clauses, wherein executing the binary file on the computing device comprises: allowing execution, by the one or more electronic processors, of a single software application permitting a limited set of operations for the computing device.

The method of one or more of these clauses, wherein executing the binary file on the computing device comprises: enabling, by the one or more electronic processors, access to a shell with a limited set of tools and actions, wherein access to the shell is limited by one or more access controls.

The method of one or more of these clauses, wherein determining that the user has not accessed the restricted functionality more than the number of times the user may access the restricted functionality comprises comparing the number of times the user may access the restricted functionality to a monotonic counter of the computing device.

The method of claim 8, wherein the user is determined to not have accessed the restricted functionality more than the number of times if a value of the monotonic counter is less than or equal to the number of times the user may access the restricted functionality.

The method of one or more of these clauses, the method further comprising: in response to executing the binary file, incrementing, by the one or more processors, the monotonic counter.

The method of one or more of these clauses, the method further comprising: validating, by the one or more processors, the binary file before allowing execution of the binary file.

The method of one or more of these clauses, wherein validating the binary file comprises: determining, by the one or more processors, a public key associated with the binary file; determining, by the one or more processors, a public key hash value based on the public key; comparing, by the one or more processors, the public key hash value to a programmed hash value accessed from a first set of fuses of the computing device; and in response to the public key hash value being equal to the programmed hash value, verifying a signature associated with the binary file using the public key; and in response to the verified signature matching a computed hash value of the binary file, allowing execution of the binary file.

The method of one or more of these clauses, the method further comprising: identifying, by the one or more processors, the first set of fuses containing the programmed hash value based on a value of a switch fuse of the computing device.

The method of one or more of these clauses, wherein validating the binary file comprises: determining, by the one or more processors, a security version number associated with the binary file; comparing, by the one or more processors, the security version number to a programmed value associated with a first set of fuses of the computing device; and in response to the security version number value being greater than or equal to the programmed value, allowing execution of the binary file.

The method of one or more of these clauses, the method further comprising: identifying, by the one or more processors, the programmed value based on a value of a switch fuse of the computing device.

The method of one or more of these clauses, the method further comprising: in response to a user input indicating that the programmed hash value has been compromised, irrevocably changing, by the one or more processors, the value of the switch fuse.

The method of one or more of these clauses, the method further comprising: in response to the binary file not being validated, not executing the binary file.

The method of one or more of these clauses, the method further comprising: in response to the binary file not being validated, performing a reboot of the computing device.

A computing device, comprising: one or more processors; and a non-transitory, computer-readable medium comprising instructions that, when executed by the one or more processors, cause the one or more processors to execute operations, the operations comprising: receiving a request for access to restricted functionality of a computing device from a user, the request for access identifying at least a portion of the restricted functionality of the computing device to be unlocked for access by the user; transmitting the request to a trusted license store; receiving data indicative of a license from the trusted license store, the data indicative of the license comprising an identifier of the portion of the restricted functionality to be unlocked for access and a number of times the user may access the restricted functionality; determining that the user has not accessed the restricted functionality more than the number of times the user may access the restricted functionality; and in response to determining that the user has not accessed the restricted functionality more than the number of times the user may access the restricted functionality: providing access to the restricted functionality to the user.

A non-transitory, computer-readable medium comprising instructions that, when executed by one or more processors, cause the one or more processors to execute operations, the operations comprising: receiving a request for access to restricted functionality of a computing device from a user, the request for access identifying at least a portion of the restricted functionality of the computing device to be unlocked for access by the user; transmitting the request to a trusted license store; receiving data indicative of a license from the trusted license store, the data indicative of the license comprising an identifier of the portion of the restricted functionality to be unlocked for access and a number of times the user may access the restricted functionality; determining that the user has not accessed the restricted functionality more than the number of times the user may access the restricted functionality; and in response to determining that the user has not accessed the restricted functionality more than the number of times the user may access the restricted functionality: providing access to the restricted functionality to the user.

## Claims

1. A method for controlling access to restricted functionality of a computing device, the method comprising:
receiving, by one or more electronic processors, a request for access to restricted functionality of a computing device from a user, the request for access identifying at least a portion of the restricted functionality of the computing device to be unlocked for access by the user;
transmitting, by the one or more electronic processors, the request to a trusted license store;
receiving, by the one or more electronic processors, data indicative of a license from the trusted license store, the data indicative of the license comprising an identifier of the portion of the restricted functionality to be unlocked for access and a number of times the user may access the restricted functionality;
determining, by the one or more electronic processors, that the user has not accessed the restricted functionality more than the number of times the user may access the restricted functionality; and
in response to determining that the user has not accessed the restricted functionality more than the number of times the user may access the restricted functionality:
providing, by the one or more electronic processors, access to the restricted functionality to the user.

2. The method of claim 1, wherein
transmitting the request to the trusted license store comprises establishing a secure, mutually-authenticated network connection to the trusted license store; and
receiving the data indicative of the license comprises receiving the data indicative of the license over the mutually-authenticated network connection from the trusted license store.

3. The method of claim 1 or 2, wherein the request includes a credential associated with the user.

4. The method of any of the claims 1-3, wherein the data indicative of the license further comprises an identity of a binary file for execution, and wherein providing access to the restricted functionality comprises allowing execution of the binary file on the computing device.

5. The method of claim 4, the method further comprising executing, by the one or more electronic processors, the binary file, wherein the binary file executes a software image version on the computing device.

6. The method of claim 5, wherein executing the binary file on the computing device comprises at least one of:
allowing execution, by the one or more electronic processors, of a single software application permitting a limited set of operations for the computing device; and
enabling, by the one or more electronic processors, access to a shell with a limited set of tools and actions, wherein access to the shell is limited by one or more access controls.

7. The method of any of the preceding claims, wherein determining that the user has not accessed the restricted functionality more than the number of times the user may access the restricted functionality comprises comparing the number of times the user may access the restricted functionality to a monotonic counter of the computing device;
wherein the user may be determined to not have accessed the restricted functionality more than the number of times if a value of the monotonic counter is less than or equal to the number of times the user may access the restricted functionality.

8. The method of claim 7, the method further comprising:
in response to executing the binary file, incrementing, by the one or more processors, the monotonic counter.

9. The method of any of the claims 4-8, the method further comprising:
validating, by the one or more processors, the binary file before allowing execution of the binary file.

10. The method of claim 9, wherein validating the binary file comprises:
determining, by the one or more processors, a public key associated with the binary file;
determining, by the one or more processors, a public key hash value based on the public key;
comparing, by the one or more processors, the public key hash value to a programmed
hash value accessed from a first set of fuses of the computing device; and in response to the public key hash value being equal to the programmed hash value,
verify a signature associated with the binary file using the public key; and
in response to the verified signature matching a computed hash value of the binary file,
allowing execution of the binary file;
the method preferably further comprising:
identifying, by the one or more processors, the first set of fuses containing the programmed hash value based on a value of a switch fuse of the computing device.

11. The method of claim 9 or 10, wherein validating the binary file comprises:
determining, by the one or more processors, a security version number associated with the binary file;
comparing, by the one or more processors, the security version number to a programmed value associated with a first set of fuses of the computing device; and in response to the security version number value being greater than or equal to the programmed value, allowing execution of the binary file.
the method preferably further comprising:
identifying, by the one or more processors, the programmed value based on a value of a switch fuse of the computing device.

12. The method of claim 11, the method further comprising:
in response to a user input indicating that the programmed hash value has been compromised,
irrevocably changing, by the one or more processors, the value of the switch fuse.

13. The method of any of the claims 9-12, the method further comprising:
in response to the binary file not being validated,
not executing the binary file; and/or
performing a reboot of the computing device.

14. A computing device, comprising:
one or more processors; and
a non-transitory, computer-readable medium comprising instructions that, when executed by the one or more processors, cause the one or more processors to execute operations to perform the method of any of the preceding claims.

15. A non-transitory, computer-readable medium comprising instructions that, when executed by one or more processors, cause the one or more processors to execute operations to perform the method of any of the claims 1-13.
